Europäisches Patentamt

European Patent Office

Office européen des brevets

(19)

(11) Publication number: **0 192 889**
**A2**

(12) # EUROPEAN PATENT APPLICATION

(21) Application number: **85308752.6**

(22) Date of filing: **02.12.85**

(51) Int. Cl.⁴: **B 62 B 3/02**

(30) Priority: **30.11.84 GB 8430273**

(43) Date of publication of application:
**03.09.86 Bulletin 86/36**

(84) Designated Contracting States:
**DE GB NL SE**

(71) Applicant: **ELOPAK LIMITED**
**Gunnels Wood Road**
**Stevenage Hertfordshire(GB)**

(72) Inventor: **Skinner, Edward Albert**
**9 Baldwins Welwyn Garden City**
**Hertfordshire(GB)**

(74) Representative: **Burrows, Anthony Gregory et al,**
**Haseltine Lake & Co. Hazlitt House 28 Southampton**
**Buildings Chancery Lane**
**London, WC2 1AT(GB)**

(54) Shelved container and a combination usable therein.

(57) In a roll container, shelves 13 pivotally connected to side walls 2 and 3 of the container are arranged in horizontal pairs, one pair above another, each shelf 19 extending over approximately half the distance between the side walls 2 and 3 in a closed-up condition of the container.

EP 0 192 889 A2

./...

FIG.2.

"APPARATUS"                    0192889

This invention relates to apparatus, particularly to a container, for example in the form of a roll container, for storing and transporting goods.

From for example Swedish published patent application 76100635 there is known a roll container comprised at least of two latticework vertical side walls, a rearward bottom wall part to which the side walls are hinged for turning about respective vertical axes, and a forward bottom wall part hinged to the rearward bottom wall part for turning about a horizontal axis. With their side walls turned outwardly relative to their rearward bottom wall parts and with their forward bottom wall parts turned upwards relative to their rearward bottom wall parts into substantially vertical positions, a plurality of these roll containers can be nested horizontally. The rearward bottom wall part includes a sectorial vertical plate formed at its top with a rectangular notch into which a rectangular projection from the forward bottom wall part engages to latch the forward bottom wall part releasably in its raised position. The container can additionally include a rear wall, a front wall and a top wall, each of latticework. Moreover, shelves can be hinged to the side walls so as to be turnable about respective horizontal axes between horizontal, working positions, in which each extends across the whole width of the container, and vertical, non-working positions arranged face-to-face with the side walls.

Unfortunately, if the shelves are spaced apart reasonably closely, their paths of turning interfere with each other, which makes bringing of the shelves to their horizontal positions, or their vertical positions, somewhat complicated.

According to one aspect of the present invention, there is provided a container comprising substantially vertical walls arranged to bound a substantially rectangular space, and a shelf pivotally mounted 0192889 of two opposite said walls so that the shelf is turnable about a horizontal axis between a working position in which the shelf extends from the one wall in a substantially horizontal plane and a non-working position in which the shelf extends in a plane substantially parallel to said one wall, characterized in that said shelf extends only part of the distance between the two opposite walls and that a second shelf is pivotally mounted on the other of said two opposite walls so that the second shelf is turnable about a horizontal axis between a working position in which it extends from the other wall in said substantially horizontal plane over substantially the remaining part of said distance and a non-working position in which the second shelf extends in a plane substantially parallel to the other wall.

Thereby, horizontal pairs of shelves can be arranged reasonably closely one pair above another, without the shelves interfering with each other during turning.

According to another aspect of the present invention, there is provided a combination comprising first and second elongate members extending in a plane substantially parallelly to each other, a third member extending from the first member to the second member and pivotally mounted on the first and second members so as to be turnable about an axis transverse to the first and second members, and detent means of said first and third members releasable by manual movement of said third member relative to the first member and serving to detain said third member against turning around said axis relative to said first member, characterized in that said third member is displaceable longitudinally of said axis away from said first member relative to said first and second members to release said detent means.

This combination provides a relatively compact and simple way of releasably retaining a third member against turning relative to first and second members.

In order that the invention may be clearly understood and readily carried into effect, reference will now be made, by way of example, to the accompanying drawings, in which:-

Figure 1 shows a front view of a roll container in a fully opened-out condition,

Figure 2 shows a front view of the container in a closed-up position with a door open,

Figure 3 shows a perspective view from above of the container in its closed-up condition with the door closed,

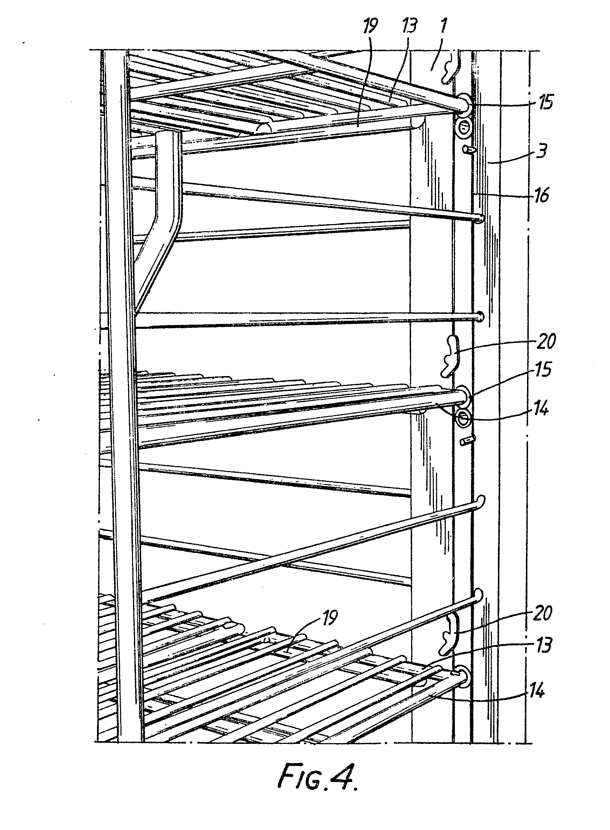

Figure 4 shows a perspective view of a detail of the container,

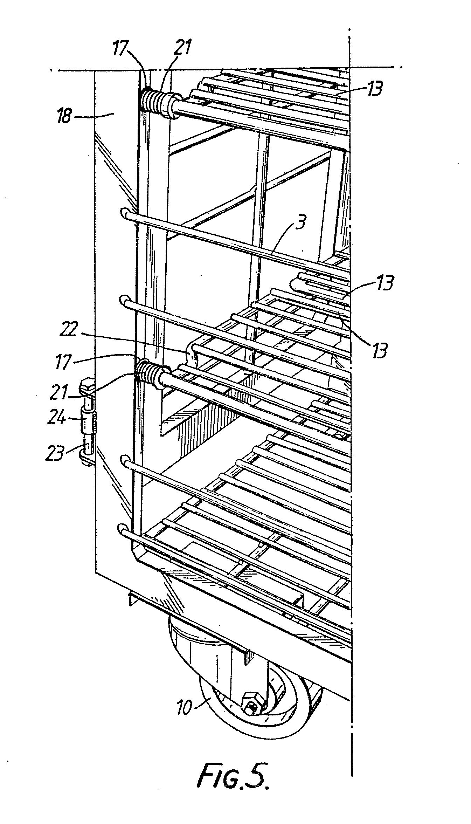

Figure 5 shows a perspective view of another detail of the container, and

Figure 6 shows a perspective view of a modified detail of the container.

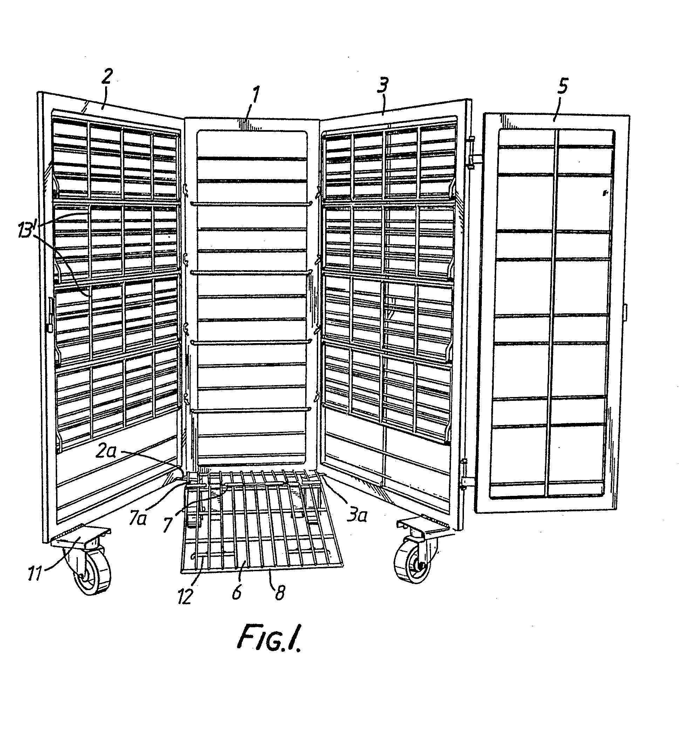

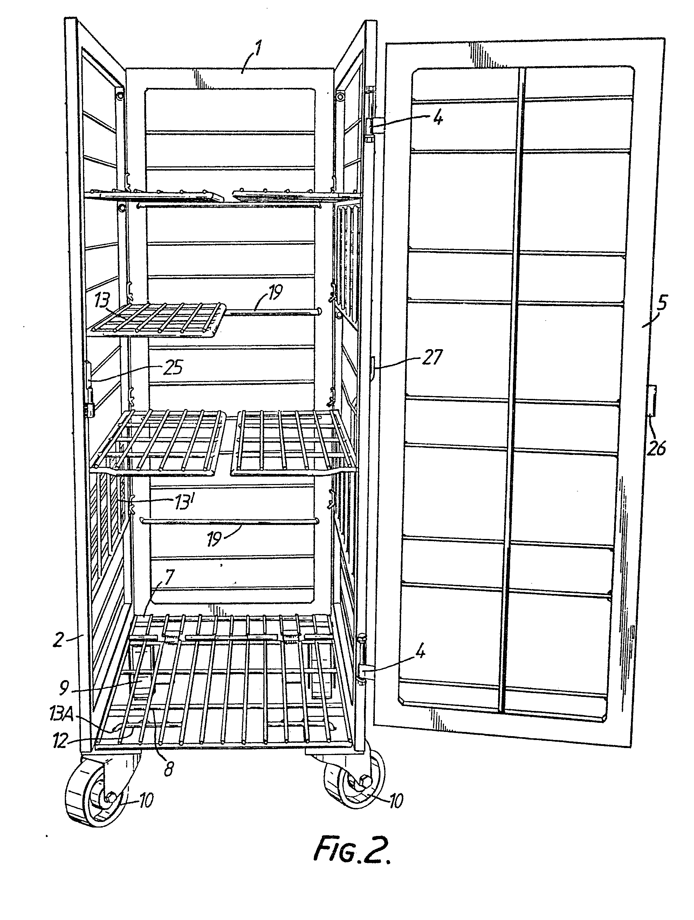

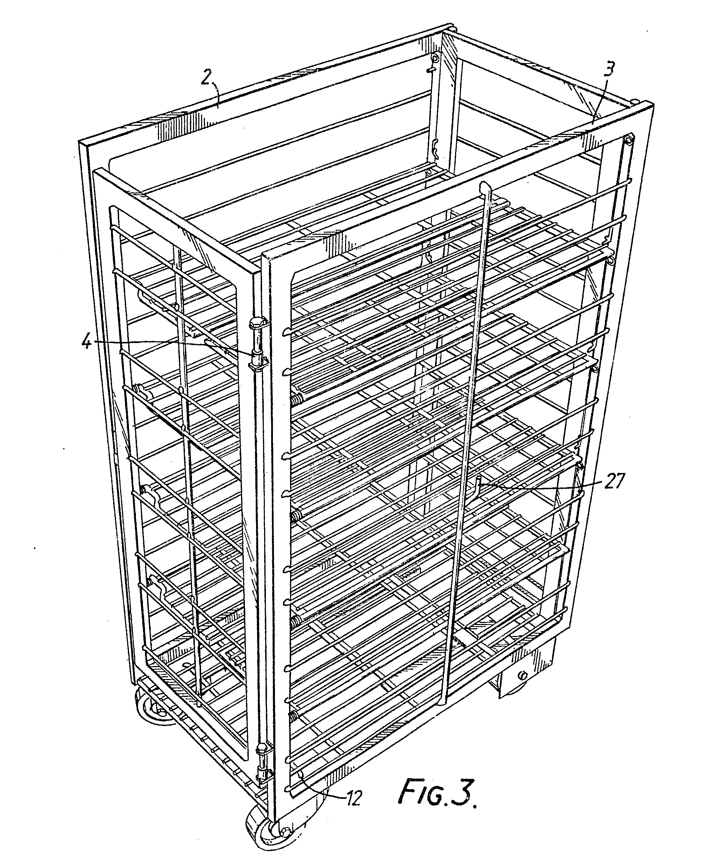

Referring to the drawings, the roll container comprises a vertical rear wall 1 connected by vertical hinges to two vertical side walls 2 and 3, of which the wall 3 is connected by vertical hinges 4 to a vertical front wall 5 ·in the form of a door. The container also includes a base wall 6 consisting of a rearward, horizontal, horizontal, minor part 7 fixed to the bottom of the wall 1 and a forward, major part 8 which is horizontally hinged at its rear edge to the rearward part 7 so that it can be raised from the position shown in Figure 1 into a position in which it rests against the wall 1, so that, with the other walls 1, 2, 3 and 5 in the condition shown in Figure 1, a number of identical such roll containers can be fitted one within another to minimize the space required for transportation of the containers when empty. The part 7 is provided at its respective ends with guides 7A in which slide respective straps 2A and 3A with upturned inner ends to abut against the guides 7A to limit the degree to which the walls 2 and 3 can be opened-out. The part 7 is provided with fixed ground wheels 9 whilst the fronts of the walls 2 and 3 are provided with castor ground wheels 10. The castor wheels 10 are mounted on horizontal lugs 11 fixed to and projecting inwardly from the walls 2 and 3 and the part 8 is provided with two strips 12 with respective bent-down outer ends which engage downwardly in vertical holes 13 in the lugs 11 to retain the respective walls 2 and 3 in the closed-up condition shown in Figures 2 and 3, in which the walls 1, 2, 3 and 6 bound a rectangular space amidst them. The strips 12 can be disengaged from the holes 13 by simply lifting the part 8 from the position shown in Figures 2 and 3. Distributed down each of the walls 2 and 3 is a series of shelves 13, in this case four in number, which are mounted on each wall 2 or 3 at equal vertical intervals from each other and from the base wall 6, the interval being slightly greater than the height of a one-pint, gable-topped carton. Each of the shelves 13 is pivotally mounted in its wall 2 or 3 so as to be turnable as a unit about a substantially horizontal axis extending in the plane of the wall and disposed at an edge of the shelf. This edge of each shelf is constituted by a horizontal rod 14 which is pivotally mounted at its ends in horizontal bearing bushes 15 in one frame upright 16 of the wall 2 or 3 and in horizontal bearing bushes 17 in the other frame upright 18 of the wall 2 or 3. Each shelf 13 is turnable between the horizontal, working position 13 shown and the vertical, non-working position 13' shown. In the horizontal position, the rear edge of each shelf rests upon a horizontal bar 19 fixed across the wall 1, and each shelf projects from the wall 2 or 3 to an extent substantially equal to one-half of the width of the wall 1 or 5. As the shelf is turned from that horizontal position towards its vertical position 13', on approaching its vertical position, its rear edge rides over a cam 20 fixed to its upright 16, whereby the shelf 13 is cammed forwardly against the action of a helical compression spring 21 acting between the corresponding

0192889

bearing bush 17 and a collar on the rod 14, the inner edge of the shelf 13 being recessed at 22 to accommodate the spring 21. As the shelf 13 reaches its vertical position 13' in the plane of the wall 2 or 3, it rides off the cam 20 to engage behind the same under the action of the spring 21. To release the shelf 13 from its position 13' engaged behind the cam 20, in order to allow the shelf to be returned to its horizontal position, the shelf is pulled manually forwards against the action of the spring 21 and then manually turned down into its horizontal position. The shelves 13 are all put in their horizontal positions when it is desired that the container should carry one-pint cartons, when five layers of one-pint cartons can be accommodated. When it is desired that the container should carry larger cartons, in particular one-quart cartons, the lower-most pair of shelves 13 and the next-but-one pair of shelves 13 are raised into their vertical positions 13', so allowing three layers of one-quart cartons to be accommodated. The walls 1, 2, 3, 5 and 6, and the shelves 13 are all of framework for ease of cleaning and visibility of the cartons. The hinge pins 23 of the hinges 4 are taller than the door leaves 24 thereof so that the door 5 can be manually lifted to a limited extent relative to the wall 3. The reason for this is that the parts 25 and 26 of a closure latch of the door operate by downward engagement of the part 26 in the part 25. Similarly, the door 5 can be kept in a position folded back against the outside of the wall 3 by downward engagement of the part 26 in a latch part 27 fixed to the outside of the wall 3.

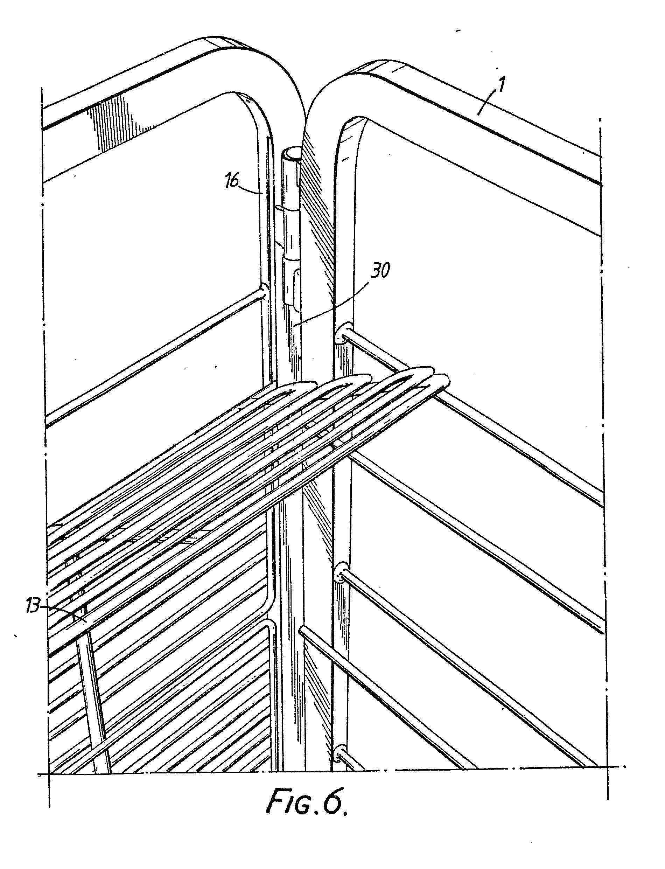

In the modified version shown in Figure 6, instead of the cams 20 each in the form of an individual body attached to its upright 16, each upright 16 bulges slightly forwards at 30 either throughout its length or at its zones immediately above the horizontal positions of the shelves 13, thereby providing shelf-latching and-camming effects corresponding to those of the cams 20.

0192889

CLAIMS:

1. A container comprising substantially vertical walls (1-3) arranged to bound a substantially rectangular space, and a shelf (13) pivotally mounted on one (2) of two opposite said walls (2, 3) so that the shelf (13) is turnable about a horizontal axis between a working position (13) in which the shelf (13) extends from the one wall (2) in a substantially horizontal plane and a non-working position (13') in which the shelf (13) extends in a plane substantially parallel to said one wall (2), characterized in that said shelf (13) extends only part of the distance between the two opposite walls (2, 3) and that a second shelf (13) is pivotally mounted on the other (3) of said two opposite walls (2, 3) so that the second shelf (13) is turnable about a horizontal axis between a working position (13) in which it extends from the other wall (3) in said substantially horizontal plane over substantially the remaining part of said distance and a non-working position (13') in which the second shelf (13) extends in a plane substantially parallel to the other wall (3).

2. A container according to claim 1, wherein the two shelves (13) each extend over substantially half of said distance.

3. A container according to claim 1 or 2, wherein each shelf (13) is urged by biassing means (21) substantially horizontally towards the third wall (1), and camming means (20, 30) is provided whereby, on turning of the shelf (13) from its working position towards its non-working position (13'), said camming means (20, 30) displaces the shelf (13) substantially horizontally against the action of said biassing means (21) and, on continued turning of the shelf (13) towards its non-working position (13'), said camming means (20, 30) permits the biassing means (21) to displace the shelf (13) substantially horizontally, so that the shelf (13) is retained in its non-working position (13') by said

camming means (20, 30).

4. A container according to claim 3, wherein each said camming means (20, 30) comprises an individual cam body (20) attached to the wall (2, 3) on which its shelf (13) is mounted.

5. A container according to claim 3, wherein each said camming means (20, 30) comprises a bulging portion (30) of the wall (2, 3) on which its shelf (13) is mounted.

6. A container according to any preceding claim, wherein the third wall (1) comprises latticework, and the two shelves (13) rest upon a horizontal member (19) of said latticework in their working positions, and are turned upwardly to bring them into their non-working positions (13').

7. A combination comprising first and second elongate members (16) extending in a plane substantially parallelly to each other, a third member (13) extending from the first member (16) to the second member (16) and pivotally mounted on the first and second members (16) so as to be turnable about an axis transverse to the first and second members (16), and detent means (13, 20, 30) of said first and third members (16, 13) releasable by manual movement of said third member (13) relative to the first member (16) and serving to detain said third member (13) against turning around said axis relative to said first member (16), characterized in that said third member (13) is displaceable longitudinally of said axis away from said first member (16) relative to said first and second members (16) to release said detent means (13, 20, 30).

8. A combination according to claim 7, and further comprising biassing means (21) urging said third member (13) longitudinally of said axis towards said first member (16).

9. A combination according to claim 7 or 8, wherein said detent means (13, 20, 30) comprises camming means (20, 30) provided or carried by said first member (16).

0192889

FIG.1.

FIG.2.

FIG.3.

FIG.4.

0192889

FIG.5.

0192889

FIG.6.